# EUROPÄISCHE PATENTSCHRIFT

(11) **EP 3 026 511 B1**
(45) Veröffentlichungstag und Bekanntmachung des Hinweises auf die Patenterteilung: **29.05.2019**
(21) Anmeldenummer: 14003964.5
(22) Anmeldetag: 25.11.2014
(51) Int. Cl.: G05B 19/042, F16K 31/04

(54) **Kabellos und verschlüsselt ansteuerbarer Stellantrieb für Armaturen in Rohrleitungen**
Remote wireless encrypted controled actuator for valves in pipelines
Mécanisme de commande cryptographique sans fil pour vannes de canalisation

(43) Veröffentlichungstag der Anmeldung: 01.06.2016
(73) Patentinhaber: Sacharowitz, Fabian, 10777 Berlin (DE); Sacharowitz, Axel, 10829 Berlin (DE); Sacharowitz, Steffen, 10967 Berlin (DE)
(72) Erfinder: Sacharowitz, Fabian, 10777 Berlin (DE); Sacharowitz, Axel, 10829 Berlin (DE); Sacharowitz, Steffen, 10967 Berlin (DE)

(56) Entgegenhaltungen:
- WO-A2-2008/109292
- US-A1- 2009 040 031
- US-B1- 8 694 770

## Beschreibung

Für die Automatisierung von Armaturen in Netzen der Wasser-, Gas-, Fernwärme- und Fernkälteversorgung, der Abwasserentsorgung sowie in Transportleitungen für Öl und Gas fehlt es häufig an der Verfügbarkeit eines Strom- und/ oder Kommunikationsanschlusses für einen Stellantrieb (Antrieb, 1). Anders als bei Armaturen in der Prozesstechnik oder auf Werksgeländen rechtfertigen die Vorteile einer Automatisierung die Kosten für das Verlegen von Kabeln für Strom und/oder Kommunikation in Flächennetzen vielfach nicht. In der Folge sind Armaturen in Versorgungsnetzen in der Fläche auch heute noch weitgehend nicht automatisiert, sondern müssen manuell oder semi-automatisch gestellt werden.

Rohrleitungen in den genannten Verteilungsnetzen unterscheiden sich von solchen etwa in der Chemischen- oder Lebensmittelindustrie vor allem durch ihre größeren Nennweiten. Entsprechend sind die Armaturen in Rohrleitungen der genannten Verteilungsnetze größer, so dass Antriebe mit einer größeren Leistung (> 50 W) zum Einsatz kommen. Die vorliegende Erfindung bezieht sich auf typische Nennweiten in den genannten Versorgungsnetzen > DN 50, insbesondere > DN 80.

Die Verteilungsnetze der Wasser- und Gasversorgung sowie der Abwasserentsorgung und des Öl-bzw. Rohöl-Transports gehören zur kritischen Infrastruktur (KRITIS), vgl. Definition KRITIS in "Bundesministerium des Innern (BMI): Nationale Strategie zum Schutz Kritischer Infrastrukturen (KRITIS-Strategie)" http://www.bmi.bund.de/SharedDocs/Downloads/DE/Broschueren/2009/kritis.html (17.06.2009). Die Verteilung von Fernwärme und Fernkälte gehört definitionsgemäß nicht zur kritischen Infrastruktur. Da gleichwohl auch hier ein vergleichbares Sicherheitsinteresse besteht, werden die Rohrleitung der Fernwärme- und Fernkälteversorgung im Rahmen der Beschreibung der vorliegenden Erfindung der kritischen Infrastruktur gleichgestellt und sollen in den Schutzbereich dieser Anmeldung ausdrücklich einbezogen sein.

Infrastrukturen gelten dann als "kritisch", wenn Sie für die Funktionsfähigkeit moderner Gesellschaften von wichtiger Bedeutung sind und ihr Ausfall oder ihre Beeinträchtigung nachhaltige Störungen im Gesamtsystem zu Folge hat (BMI aaO.). Dies bedeutet im Fall der hier betrachteten Versorgungsleitungen die Störung bei der Versorgung der Bevölkerung mit wichtigen Gütern (BMI, aaO).

Armaturen sind wesentliche Bestandteile eines Rohrleitungsnetzes. Insbesondere ermöglichen Armaturen, den Fluss des Mediums durch die Rohrleitung im Falle einer Havarie oder einer Gefahr, zu unterbrechen. Die Funktionsfähigkeit eines Versorgungsnetzes kann beeinträchtigt oder im Extremfall zumindest vorübergehend vollständig aufgehoben werden, wenn Netzarmaturen aufgrund eines Defektes, im Rahmen einer Sabotage oder eines terroristischen Angriffs gegen den Willen des Versorgungsunternehmens geschlossen bzw. an bestimmten Stellen geöffnet werden.

Insofern sollte ein Antrieb (1), der eine Netzarmatur der kritischen Infrastruktur fernsteuert, ein bestimmtes Maß an Sicherheit dagegen gewährleisten, dass ein Unbefugter dem Antrieb (1) gegen den Willen des Versorgers einen Stellbefehl zum Öffnen oder Schließen der Armatur zu geben vermag. Ein solcher "Angriff" ist mittels einer Schadsoftware über eine beliebige Schnittstelle auf den Leitstand oder auf den Kommunikationsweg zwischen Leitstand und Antrieb denkbar. Werden Antriebe (1) für Armaturen in Rohrleitungsnetzen der kritischen Infrastruktur ferngesteuert, sollte diese Verbindung mindestens der deutschen Schutzklasse "Verschlusssache: Nur für den Dienstgebrauch" (VS-NfD) genügen (Ziff. 2.3 der Anlage 1 zur den Allgemeine Verwaltungsvorschrift des Bundesministeriums des Innern zum materiellen und organisatorischen Schutz von Verschlusssachen (VSA), entspricht weitgehend der internationalen Sicherheitsstufe NATO RESTRICTED und RESTREINT UE).

WO 2008/109292 offenbart ein Antriebssystem mit einem Antrieb (1) für Armaturen in Rohrleitungen, mit einer Steuereinheit (2) zur Steuerung des Antriebs (1). Es wird zwar erwähnt, dass eine SCADA-Steuereinheit ein Ventil oder einen Aktuator steuern kann. Allerdings wird nicht erwähnt ob es sich bei dem Aktuator um einen Antrieb für eine Armatur in Rohrleitung handelt und/oder OB dieser obendrein eine Steuereinheit aufweist. Jedenfalls wird nicht erwähnt, dass eine Steuereinheit (2) und das Kryptografie-Modul (5) ausgebildet sind, bei Eintreten vorbestimmter Bedingungen in einem Standby-Betrieb oder in einem aktiven Betrieb zu arbeiten. Nachteilig an D1 ist damit besonders, dass durch das Fehlen eines Standby-Betriebs die in D1 beschriebene Vorrichtung nicht in einen energiesparenden Zustand versetzt werden kann, wenn gerade keine Stellbefehle übermittelt werden. Dies ist aber für einen wirtschaftlichen dezentralen Betrieb auf Akkubasis erforderlich.

In US 2009/040031 wird ein System aus einer Signal-Relais Einheit, einem Kommunikationsnetz sowie einer Operationseinheit beschrieben. Dabei werden auch Antriebe als zu steuernde Einheiten beschrieben. Allerdings wird nicht beschrieben, dass diese Antriebe Armaturen in den hier beschriebenen Rohrleitungen antreiben. Weiter nachteilig an der in D2 offenbarten Erfindung ist, dass die Signal-Relay-Einheit separiert von den zu steuernden Antrieben vorgesehen ist und schon deshalb nicht mit dem hier beschriebenen Kryptografie-Modul (5) vergleichbar ist. Nachteilig daran ist vor allem, dass die Kommunikation zwischen den Antrieben und der Signal-Relay-Einheit unverschlüsselt erfolgt. Schließlich ist kein Stand-by-Betrieb der Signal-Relais Einheit vorgesehen, was einen dezentralen Betrieb unwirtschaftlich macht.

US 8694770 beschreibt ein sicheres SCADA-System in dem mindestens ein Feldgerät über ein Modem mit dem SCADA-System verbunden ist und zwischen Modem und Feldgerät ein Sicherheitsmodul für die eine sichere, verschlüsselte Kommunikation geschaltet ist. Auch hier wird nicht erwähnt, ob es sich bei den Feldgeräten um einen Antrieb für eine Armatur in Rohrleitung handelt. Jedenfalls wird nicht erwähnt, dass Modem und Sicherheitsmodul ausgebildet sind, um bei Eintreten vorbestimmter Bedingungen in einem Standby-Betrieb oder in einem aktiven Betrieb zu arbeiten. Nachteilig an D3 ist damit ebenfalls, dass durch das Fehlen eines Standby-Betriebs die in D3 beschriebene Vorrichtung nicht in einen energiesparenden Zustand versetzt werden kann, wenn gerade keine Stellbefehle übermittelt werden. Dies ist aber für einen wirtschaftlichen dezentralen Betrieb auf Akkubasis erforderlich.

In EP 2 708 967 A1 wird eine dezentrale elektrische Stellvorrichtung für Armaturen in Netzen der Wasser-, Gas-, Fernwärme und Fernkälteversorgung, der Abwasserentsorgung sowie in Transportleitungen für Öl und Gas beschrieben. Die Vorrichtung verfügt über eine kabellose bidirektionale Kommunikationsmöglichkeit mit dem Leitstand (9). Nachteilig daran ist, dass die darin beschriebene kabellose bidirektionale Kommunikationsmöglichkeit mit einem Server keinen hinreichend sicheren Schutz gegen einen Angriff von außen bietet, insbesondere nicht den Anforderungen der Schutzklasse VS-NfD oder höher genügt.

In EP 2 320 285 A1 wird eine Datenverarbeitungsvorrichtung für Feldgeräte der Füllstandmessung oder Druckmesstechnik beschrieben, die in der Lage ist, die von dem Feldgerät übermittelten Daten einem Empfänger verschlüsselt bereitzustellen. Nachteilig hieran ist, dass zum einen keine bidirektionale verschlüsselte Kommunikation beschrieben wird und dass zum anderen keine Antriebe (1) beschrieben werden. Vor allem aber beschreibt die Erfindung Feldgeräte der Prozesstechnik. Hierbei handelt es sich nicht um Rohrleitungen der hier betrachteten Art. Die kleinen Durchmesser in der Prozesstechnik erfordern gerade bei Antrieben für die Armaturen viel geringere Leistungen und damit einhergehend völlig unterschiedlich dimensionierte Energiequellen. Zudem wird es sich in der Prozesstechnik im Gegensatz zu den im Rahmen der vorliegenden Erfindung betrachteten Versorgungsnetzen zumeist nicht um kritische Infrastruktur handeln.

In DE 10314721 wird ein Verfahren zur sicheren Datenübertragung über einen Feldbus beschrieben. Nachteilig ist hier, dass sich dieses Verfahren auf eine kabelgestützte Kommunikation stützt.

Die Nachteile des Stands der Technik werden durch die vorliegend beschriebene Erfindung mit den im Anspruch 1 genannten Merkmalen gelöst. Dagegen beschreibt diese Erfindung keine Lösung für die IT-Sicherheit des Leitstands, aus dem der Stellantrieb ferngesteuert wird.

Gegenstand der hier beschriebenen Erfindung ist Antriebssystem gemäß Anspruch 1. Ein elektrischer oder pneumatisch arbeitender Antrieb (1) für Armaturen in den o. g. Versorgungsleitungen, die zur kritischen Infrastruktur gehören (einschließlich Fernwärme und Fernkälte), dem ein vom Betriebssystem (3) des Antriebs (1) getrenntes internes oder externes Kryptografie-Modul (5), das für die VSA Sicherheitsstufe VS-NfD oder höher zugelassen ist, zugeordnet ist und der über ein Kommunikationsmodul (6) bidirektional und kabellos an die zentrale IT des Versorgungsunternehmens angeschlossen werden kann wobei zumindest die Steuereinheit (2) und das Kryptografie-Modul (5) ausgebildet sind, bei Eintreten vorbestimmter Bedingungen in einem Standby-Betrieb oder in einem aktiven Betrieb zu arbeiten.

Durch ein von der Steuereinheit separates Kryptografie-Modul ist es möglich, Antriebe (1) auch nachträglich sicher zu machen. Dabei ist eine modulare Lösung besonders vorteilhaft, da ein Antriebshersteller auch auf existierende Kryptografie-Lösungen zurückgreifen kann. Außerdem ist eine Manipulation bei einer solchen Stand-Alone Lösung kaum möglich.

Es ist besonders vorteilhaft, wenn der Algorithmus, der auf dem Kryptografie-Modul läuft, über eine Schnittstelle veränderbar ist. Dadurch können unsicher gewordene Algorithmen ausgetauscht werden. Zum Beispiel gibt das Bundesamt für Sicherheit in der Informationstechnik (BSI) laufend aktuelle Empfehlungen über sichere Verschlüsselungsalgorithmen heraus, an die die Verschlüsselung der Kommunikation angepasst werden kann. Da Antriebe für Armaturen in der Regel mindesten 20 Jahre verbaut bleiben, können Updates des Algorithmus unumgänglich sein. Zudem lassen sich über eine solche Schnittstelle auch proprietäre Algorithmen nutzen.

Da in der Regel Antriebe in Versorgungsnetzen mit weiten Abständen untereinander verbaut sind, ist es für Angreifer nicht praxistauglich, jedes Kryptografie-Modul einzeln zu kompromittieren. Ein Angriff müsste fast zwangsläufig über eine Zentrale, wie z.B. einen Leitstand erfolgen, um gleichzeitig einen Angriff auf mehrere Antriebe zu ermöglichen. Daher ist eine zusätzliche Schnittstelle zur Veränderung des Algorithmus eine Sicherheitssteigerung.

Nachfolgend werden Ausführungsbeispiele der Erfindung mit Bezug auf die Figuren dargestellt. Dabei sei betont, dass diese nur einzelne technische Ausgestaltungsmöglichkeiten darstellen. Keinesfalls stellen die nachfolgenden Ausführungsbeispiele alle technischen Lösungsmöglichkeiten der hier beschriebenen Erfindung dar, welche alleine durch die Ansprüche definiert ist.
Die Figur 1 zeigt ein erstes Ausführungsbeispiel eines erfindungsgemäßen Antriebssystems
Die Figur 2 zeigt ein zweites Ausführungsbeispiel eines erfindungsgemäßen Antriebssystems
Die Figur 3 zeigt ein drittes Ausführungsbeispiel eines erfindungsgemäßen Antriebssystems

Alle drei Ausführungsbeispiele verfügen über eine autarke Energiequelle, die die Steuereinheit (2), das Kommunikationsmodul (6) und das Kryptografie-Modul (5) zumindest zeitweise mit Energie versorgen kann. Außerdem ist die Steuereinheit (2) und das Kryptografie-Modul (5) ausgebildet, bei Eintreten vorbestimmter Bedingungen in einem Standby-Betrieb oder in einem aktiven Betrieb zu arbeiten.

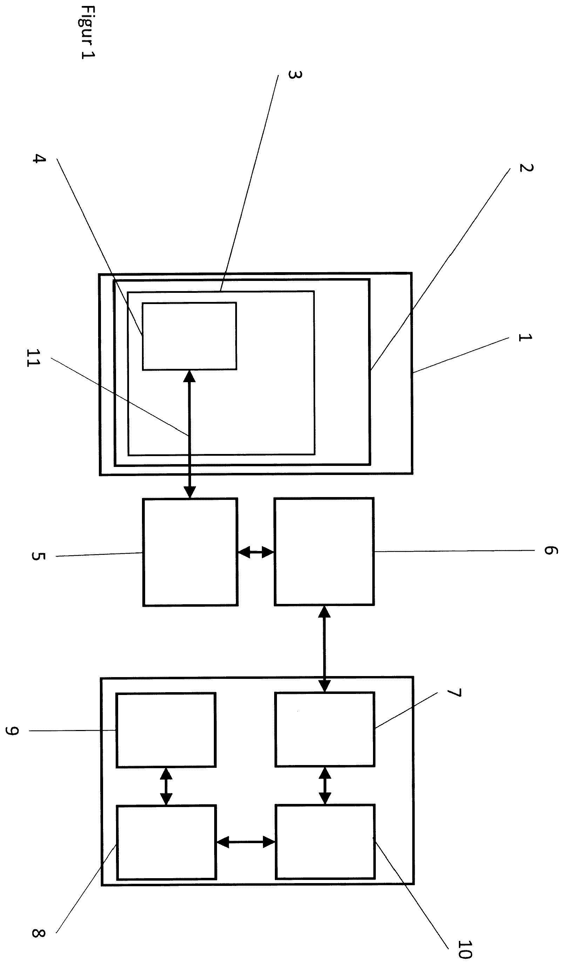

In dem ersten Ausführungsbeispiel (Figur 1) ist der Steuerrechner (2), auf dem das Betriebssystem (3) und die Antriebs-Firmware (4) laufen, eines elektrischen oder pneumatischen Antriebs (1) mit einer aus dem Antrieb (1) herausgeführten Schnittstelle (11) (bspw. Ethernet) ausgestattet und über diese mit einem für die VSA Sicherheitsstufe VS-NfD oder höher zugelassenen VPN-Gateway als Kryptografie-Modul (5) verbunden. Das Kryptografie-Modul (5) ver- bzw. entschlüsselt die Kommunikation mit dem Leitstand (9) mittels eines beliebigen, über ein Kryptointerface nachladbaren, auch proprietären, Kryptoalgorithmus. Das Kryptografie-Modul (5) wird mit einem Kommunikationsmodul (6), z. B. mit einen GSM/3G-Router verbunden. Dieser stellt eine kabellose Verbindung mit einem Kommunikationsmodul (7), etwa einem Router, auf der Gegenseite, bspw. in der zentralen IT des Versorgungsunternehmens, her. Hinter dem Kommunikationsmodul (7) der Gegenseite befindet sich ein weiteres Kryptografie-Modul (10), das die der Kommunikation zwischen Leitstand (9) und Antrieb (1) dienenden Informationen mittels des passenden Kryptoalgorithmus ebenfalls zu ver- bzw. entschlüsseln vermag. Über einen Kommunikationsserver (8) gelangen die Informationen sodann sicher in den Leitstand (9) hinein oder aus ihm heraus. Die Energieversorgung mittels einer autarken Energiequelle, vorzugsweise in Verbindung mit einem Akkumulator, wird ermöglicht, indem das Kryptografie-Modul (5), das Kommunikationsmodul (6) und der Steuerrechner (2) standardmäßig in einem energiesparenden Modus versetzt sind. Durch einen Weckruf des Leitstands (9) wird das Kommunikationsmodul (6) in den Normalbetrieb versetzt und schaltet durch ein geeignetes Signal das Kryptografie-Modul (5) und den Steuerrechner (2) des Antriebs (1) ebenfalls in den Normalmodus in dem der Antrieb (1) Stellbefehle verarbeiten und beantworten kann.

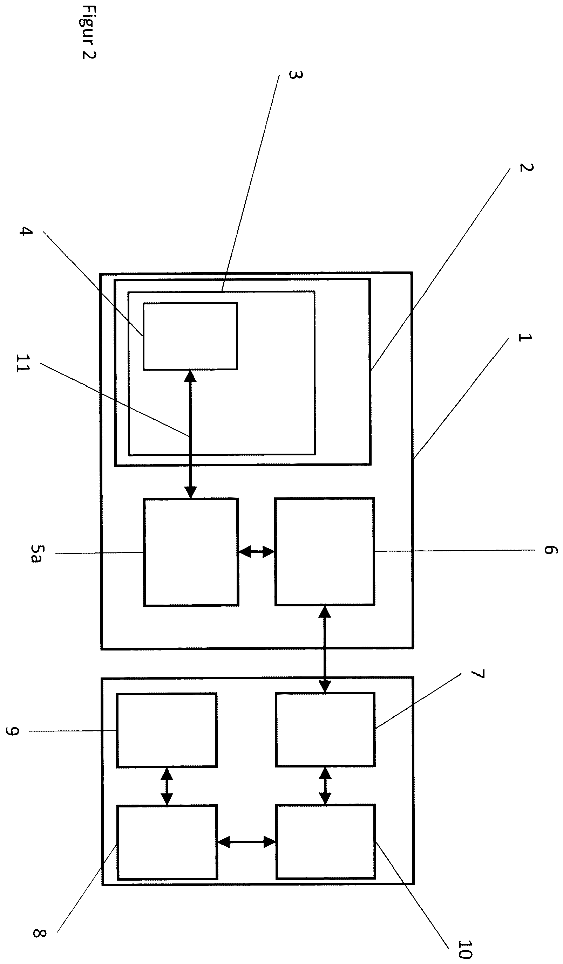

In dem zweiten Ausführungsbeispiel wird das für die VSA Sicherheitsstufe VS-NfD zugelassenen VPN-Gateway als Kryptografie-Modul (5) und das Kommunikations-Modul (6) in einen akkubetriebenen Antrieb (1) integriert (Figur 2). Als Schnittstellen (11) zwischen den Komponenten kann auch in diesem Fall Ethernet genutzt werde. Es sind jedoch auch andere Schnittstellen wie z. B. USB- oder eine serielle (RS-232) Schnittstellen möglich. Das Kryptografie-Modul (5) (bspw. ein VPN-Gateway) und das Kommunikations-Modul (6) (bspw. ein GSM/3G-Router) können als sog. embedded Module in die Antriebselektronik integriert werden. Die Energieversorgung auf Akkubasis wird ermöglicht, indem das Kryptografie-Modul (5), das Kommunikationsmodul (6) und der Steuerrechner (2) standardmäßig in einem energiesparenden Modus versetzt sind. Durch einen Weckruf des Leitstands (9) wird das Kommunikationsmodul (6) in den Normalbetrieb versetzt und schaltet durch ein geeignetes Signal das Kryptografie-Modul (5) und den Steuerrechner (2) des Antriebs (1) ebenfalls in den Normalmodus in dem der Antrieb (1) Stellbefehle verarbeiten und beantworten kann.

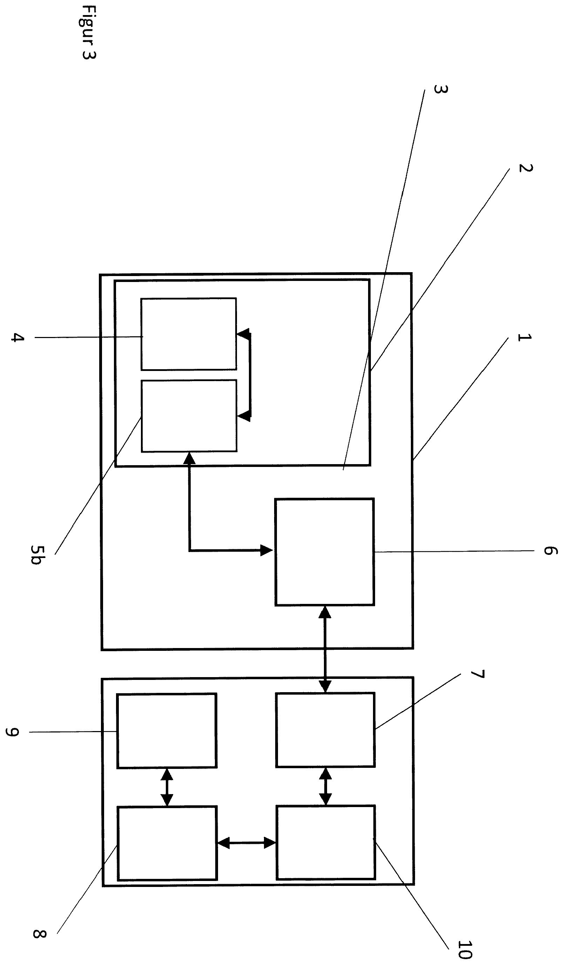

In dem dritten Ausführungsbeispiel (Figur 3) wird das Kryptografie-Modul (5) in den Steuerrechner (2) des Antriebs (1) integriert. Bei dieser Ausführung wird die gesamte Elektronik des Antriebs (1) so gestaltet, dass sie der VSA Sicherheitsstufe VS-NfD oder höher genügt. Hierbei werden durch ein gehärtetes Betriebssystem (3) Antriebs-Firmware (4) und Kryptografie-Modul (5) streng voneinander getrennt, um die Integrität des Kryptografie-Modul (5) zu gewährleisten. Das Kommunikations-Modul (6) zur kabellosen Kommunikation mit dem Leitstand (9) kann in diesem Fall nicht nur über einen unabhängigen Router erfolgen, sondern auch mittels eines Modems, das vom Steuerrechner (2) angesteuert werden kann. Ebenso sind andere Funkverbindungen über ein entsprechendes Modul möglich. Für diese Integrationsstufe ist die VS-NfD Zulassung für die gesamte Steuerelektronik des Antriebs erforderlich. Das Kommunikationsmodul (5) kann in diesem Ausführungsbeispiel als eine durch das gehärtete Betriebssystem (3) streng von der Antriebs-Firmware (4) getrenntes Softwaremodul oder als eigenständiges Hardware-Kryptografie-Modul gestaltet sein, das durch eigene Hardware die Verschlüsselung der von oder in den Antrieb gelangenden Informationen mittels des beliebigen, auch proprietären Kryptoalgorithmus realisiert. Die Energieversorgung mittels einer autarken Energiequelle, vorzugsweise in Verbindung mit einem Akkumulator, wird ermöglicht, indem der Steuerrechner (2) samt integriertem Kryptografie-Modul (5) sowie das Kommunikationsmodul (6) standardmäßig in einem energiesparenden Modus versetzt sind. Durch einen Weckruf des Leitstands (9) wird das Kommunikationsmodul (6) in den Normalbetrieb versetzt und schaltet durch ein geeignetes Signal den Steuerrechner (2) mit integriertem Kryptografie-Modul (5) des Antriebs (1) ebenfalls in den Normalmodus in dem der Antrieb (1) Stellbefehle verarbeiten und beantworten kann.

Zweckmäßigerweise wird die Kommunikation zwischen Antrieb (1) und Leitstand (9) zusätzlich so eingerichtet, dass sie dem Internet Standard IPsec (Internet Protocol Security) genügt.

## Patentansprüche

1. Kabellos fernsteuerbares Antriebssystem, umfassend einen Antrieb (1) für Armaturen in Rohrleitungen, eine Steuereinheit (2) zur Steuerung des Antriebs und ein Kommunikationsmodul (6) zum kabellosen Empfangen und Senden von Daten, umfassend weiterhin ein von der Steuereinheit (2) separates Kryptografie-Modul (5, 5a, 5b) aufweisend eine erste Daten-Schnittstelle zur unverschlüsselten Kommunikation mit der Steuereinheit (2), eine zweite Daten-Schnittstelle zur verschlüsselten Kommunikation mit dem Kommunikationsmodul (6), wobei das Kryptografie-Modul ausgebildet ist, Daten von der Steuereinheit mit einem vorbestimmten Algorithmus zu verschlüsseln und die verschlüsselten Daten an das Kommunikationsmodul (6) weiterzuleiten und verschlüsselte Daten, welche vom Kommunikationsmodul (6) empfangen werden, mit einem vorbestimmten Algorithmus zu entschlüsseln und die entschlüsselten Daten an die Steuereinheit (2) zu kommunizieren und wobei das Kryptografie-Modul (5) über die erste und die zweite Schnittstelle in Kommunikationsverbindung mit der Steuereinheit und dem Kommunikationsmodul steht, wobei der Antrieb (1) weiterhin eine autarke Energiequelle aufweist, der die Steuereinheit (2), das Kommunikationsmodul (6) und das Kryptografie-Modul (5) zumindest zeitweise mit Energie versorgen kann und wobei zumindest die Steuereinheit (2) und das Kryptografie-Modul (5) ausgebildet sind, bei Eintreten vorbestimmter Bedingungen in einem Standby-Betrieb oder in einem aktiven Betrieb zu arbeiten.

2. Kabellos fernsteuerbares Antriebssystem gemäß Anspruch 1, wobei das Kryptografie-Modul (5) eine dritte Schnittstelle aufweist, über welche der vorbestimmte Algorithmus ausgetauscht werden kann.

3. Kabellos fernsteuerbares Antriebssystem gemäß einem der voranstehenden Ansprüche, wobei der Antrieb (1) ein Antriebs-Gehäuse aufweist, in dem die Steuereinheit (2) untergebracht ist, und wobei das Kryptografie-Modul (5) ein Kryptografie-Modul-Gehäuse aufweist, welches außerhalb vom Antriebs-Gehäuse angeordnet ist.

4. Kabellos fernsteuerbares Antriebssystem gemäß Anspruch 1 oder 2, wobei der Antrieb (1) ein Antriebs-Gehäuse aufweist, in dem die Steuereinheit (2), das Kommunikationsmodul (6) und das von der Steuereinheit (2) separate Kryptografie-Modul (5a) angeordnet sind.

5. Kabellos fernsteuerbares Antriebssystem gemäß Anspruch 4, wobei die Steuereinheit (2) und das von der Steuereinheit (2) separate Kryptografie-Modul (5b) auf einer gemeinsamen Platine angeordnet sind.

6. Kabellos fernsteuerbares Antriebssystem gemäß Anspruch 5, wobei das separate Kryptografie-Modul (5b) durch eine vom restlichen Betriebssystem getrennte Software gebildet wird.

7. Kabellos fernsteuerbares Antriebssystem gemäß Anspruch 5, wobei das separate Kryptografie-Modul (5b) durch ein eigenes Hardware-Verschlüsselungsmodul gebildet wird.

8. Kabellos fernsteuerbares Antriebssystem nach einem der voranstehenden Ansprüche, wobei die erste und die zweite Schnittstelle eine Schnittstelle nach USB und /oder Ethernet und/oder RS232 ist.

9. Kabellos fernsteuerbares Antriebssystem nach einem der voranstehenden Ansprüche, wobei das Kommunikationsmodul ein GSM/3G-Router und/oder ein UMTS-Modem und/oder WLAN und/oder Bluetooth umfasst.

10. Kabellos fernsteuerbares Antriebssystem nach einem der voranstehenden Ansprüche, ferner umfassend eine Leitstand (9) umfassend eine leitstandseitige Kommunikationsserver (8), ein leitstandseitiges Kommunikationsmodul (7) und ein zweites, vom Kommunikationsserver (8) separates Kryptografie-Modul (10) aufweisend eine erste Daten-Schnittstelle zur unverschlüsselten Kommunikation mit der leitstandseitigen Steuereinheit (2), eine zweite Daten-Schnittstelle zur verschlüsselten Kommunikation mit dem leitstandseitigen Kommunikationsmodul (7), wobei das Kryptografie-Modul (10) ausgebildet ist, Daten von der leitstandseitigen Steuereinheit mit einem vorbestimmten Algorithmus zu verschlüsseln und die verschlüsselten Daten an das leitstandseitige Kommunikationsmodul (6) weiterzuleiten und verschlüsselte Daten, welche vom leitstandseitigen Kommunikationsmodul (6) empfangen werden, mit einem vorbestimmten Algorithmus zu entschlüsseln und die entschlüsselten Daten an die leitstandseitige Steuereinheit (2) zu kommunizieren und wobei das zweite Kryptografie-Modul (5) über die erste und die zweite Schnittstelle in Kommunikationsverbindung mit der leitsandseitigen Steuereinheit und dem leitstandseitigen Kommunikationsmodul steht.

## Claims

1. A wirelessly remotely controllable actuator system, comprising an actuator (1) for valves in pipelines, a control unit (2) for controlling the actuator, and a communication module (6) for wirelessly receiving and transmitting data, further comprising a cryptographic module (5, 5a, 5b) separate from the control unit (2), having a first data interface for unencrypted communication with the control unit (2), a second data interface for encrypted communication with the communication module (6), wherein the cryptographic module (6) is adapted to encrypt data from the control unit with a predetermined algorithm and to forward the encrypted data to the communication module (6) and to decrypt encrypted data received from the communication module (6) with a predetermined algorithm and to communicate the decrypted data to the control unit (2), and wherein the cryptographic module (5) is in communication connection with the control unit and the communication module via the first and second interfaces, wherein the actuator (1) further includes an autonomous power source which can at least temporarily supply power to the control unit (2), the communication module (6) and the cryptographic module (5), and wherein at least the control unit (2) and the cryptographic module (5) are adapted to operate in a standby mode or in an active mode when predetermined conditions occur.

2. The wirelessly remotely controllable actuator system according to claim 1, wherein the cryptographic module (5) has a third interface via which the predetermined algorithm can be exchanged.

3. The wirelessly remotely controllable actuator system according to any one of the preceding claims, wherein the actuator (1) comprises an actuator housing in which the control unit (2) is housed, and wherein the cryptographic module (5) comprises a cryptographic module housing arranged outside the actuator housing.

4. The wirelessly remotely controllable actuator system according to claim 1 or 2, wherein the actuator (1) comprises an actuator housing in which the control unit (2), the communication module (6), and the cryptographic module (5a) separate from the control unit (2) are arranged.

5. The wirelessly remotely controllable actuator system according to claim 4, wherein the control unit (2) and the cryptographic module (5b) separate from the control unit (2) are arranged on a common circuit board.

6. The wirelessly remotely controllable actuator system according to claim 5, wherein the separate cryptographic module (5b) is formed by software separate from the rest of the operating system.

7. The wirelessly remotely controllable actuator system according to claim 5, wherein the separate cryptographic module (5b) is formed by an integrated hardware encryption module.

8. The wirelessly remotely controllable actuator system according to any one of the preceding claims, wherein the first and second interfaces are an interface for USB and/or Ethernet and/or RS232.

9. The wirelessly remotely controllable actuator system according to any one of the preceding claims, wherein the communication module comprises a GSM/3G router and/or a UMTS modem and/or WLAN and/or Bluetooth.

10. The wirelessly remotely controllable actuator system according to any one of the preceding claims, further comprising a control station (9), comprising a communication server (8) on the control station side, a communication module (7) on the control station side and a second cryptographic module (10) separate from the communication server (8), having a first data interface for unencrypted communication with the control unit (2) on the control station side, a second data interface for encrypted communication with the communication module (7) on the control station side, wherein the cryptographic module (10) is adapted to encrypt data from the control unit on the control station side with a predetermined algorithm and to forward the encrypted data to the communication module (6) on the control station side and to decrypt encrypted data received from the communication module (6) on the control station side with a predetermined algorithm and to communicate the decrypted data to the control unit (2) on the control station side, and wherein the second cryptographic module (5) is in communication connection with the control unit on the control station side and the communication module on the control station side via the first and second interfaces.

## Revendications

1. Système d'entraînement sans fil télécommandé comprenant un entraînement (1) pour une robinetterie dans des tuyauteries, une unité de commande (2) pour commander l'entraînement et un module de communication (6) pour réceptionner et envoyer sans fil des données, comprenant en outre un module de cryptographie (5, 5a, 5b) séparé de l'unité de commande (2) présentant une première interface de données pour une communication décryptée avec l'unité de commande (2), une deuxième interface de données pour une communication cryptée avec le module de communication (6), le module de cryptographie étant conçu pour crypter des données de l'unité de commande avec un algorithme prédéfini et transmettre les données cryptées au module de communication (6) et décrypter des données cryptées, lesquelles sont réceptionnées par le module de communication (6), avec un algorithme prédéfini et communiquer les données décryptées à l'unité de commande (2), et le module de cryptographie (5) restant en liaison de communication avec l'unité de commande et le module de communication via la première et la deuxième interface, l'entraînement (1) présentant toujours une source d'énergie autonome, qui peut alimenter au moins temporairement l'unité de commande (2), le module de communication (6) et le module de cryptographie (5) en énergie, et au moins l'unité de commande (2) et le module de cryptographie (5) étant formés pour fonctionner en mode veille ou en un mode actif en cas de conditions prédéfinies.

2. Système d'entraînement sans fil télécommandé selon la revendication 1, le module de cryptographie (5) présentant une troisième interface par laquelle l'algorithme prédéfini peut être remplacé.

3. Système d'entraînement sans fil télécommandé selon l'une quelconque des revendications précédentes, l'entraînement (1) présentant un boîtier d'entraînement, dans lequel l'unité de commande (2) est logée, et le module de cryptographie (5) présentant un boîtier de module de cryptographie lequel est disposé à l'extérieur du boîtier d'entraînement.

4. Système d'entraînement sans fil télécommandé selon la revendication 1 ou 2, l'entraînement (1) présentant un boîtier d'entraînement, dans lequel l'unité de commande (2), le module de communication (6) et le module de cryptographie (5a) séparé de l'unité de commande (2) sont disposés.

5. Système d'entraînement sans fil télécommandé selon la revendication 4, l'unité de commande (2) et le module de cryptographie (5b) séparé de l'unité de commande (2) étant disposés sur une plaquette commune.

6. Système d'entraînement sans fil télécommandé selon la revendication 5, le module de cryptographie (5b) séparé étant formé d'un logiciel séparé d'un système d'exploitation restant.

7. Système d'entraînement sans fil télécommandé selon la revendication 5, le module de cryptographie (5b) séparé étant formé d'un propre module de cryptage matériel.

8. Système d'entraînement sans fil télécommandé selon l'une quelconque des revendications précédentes, la première et la deuxième interfaces étant des interfaces USB et/ou Ethernet et/ou RS232.

9. Système d'entraînement sans fil télécommandé selon l'une quelconque des revendications précédentes, le module de communication comprenant un routeur GSM/3G et/ou un modem UMTS et/ou WLAN et/ou Bluetooth.

10. Système d'entraînement sans fil télécommandé selon l'une quelconque des revendications précédentes, comprenant en outre un poste de commande (9) comprenant un serveur de communication (8) côté poste de commande, un module de communication (7) côté poste de commande et un deuxième module de cryptographie (10) séparé du serveur de communication (8) comprenant une première interface de données pour une communication décryptée avec l'unité de commande (2) côté poste de commande, une deuxième interface de données pour une communication cryptée avec le module de communication (7) côté poste de commande, le module de cryptographie (10) étant conçu pour crypter des données de l'unité de commande côté poste de commande avec un algorithme prédéfini et transmettre les données cryptées au module de communication (6) côté poste de commande et décrypter des données cryptées, lesquelles sont réceptionnées par le module de communication (6) côté poste de commande, avec un algorithme prédéfini et communiquer les données décryptées à l'unité de commande (2) côté poste de commande, et le deuxième module de cryptographie (5) restant en liaison de communication avec l'unité de commande côté poste de commande et le module de communication côté poste de commande via la première et la deuxième interface.
